# EUROPÄISCHE PATENTSCHRIFT

(11) **EP 2 908 467 B1**
(45) Veröffentlichungstag und Bekanntmachung des Hinweises auf die Patenterteilung: **12.10.2016**
(21) Anmeldenummer: 14155041.8
(22) Anmeldetag: 13.02.2014
(51) Int. Cl.: H04L 12/24

(54) **Verfahren zum Netzwerkmanagement eines Telekommunikationsnetzwerkes, Telekommunikationsnetzwerk für das Netzwerkmanagement, Computerprogramm und Computerprogrammprodukt**
Method of network management for a telecommunication network, telecommunication network for network management, computer program and computer program product
Procédé de gestion de réseau d'un réseau de télécommunication, réseau de télécommunication pour la gestion de réseau, programme informatique et produit de programme informatique

(43) Veröffentlichungstag der Anmeldung: 19.08.2015
(73) Patentinhaber: Deutsche Telekom AG, 53113 Bonn (DE)
(72) Erfinder: Scherer, Christoph, 64625 Bensheim (DE)
(74) Vertreter: Schwöbel, Thilo K.

(56) Entgegenhaltungen:
- WO-A2-2006/124972
- US-A1- 2008 114 771
- US-A1- 2009 003 199
- US-A1- 2009 083 374

## Beschreibung

### Stand der Technik

Die Erfindung betrifft ein Verfahren zum Netzwerkmanagement eines Telekommunikationsnetzwerkes.

Verfahren zum Netzwerkmanagement eines Telekommunikationsnetzwerkes - d.h. die Verwaltung, Betriebstechnik und/oder Überwachung des Telekommunikationsnetzwerkes - sind allgemein bekannt, so zum Beispiel aus der Druckschrift US 2009/0083374 A1.

Beispielsweise gibt es unterschiedliche Netzwerkmanagementverfahren für unterschiedliche Netzwerkinfrastrukturen, wobei beispielsweise zwischen Festnetzinfrastruktur und Mobilfunknetzinfrastruktur differenziert wird.

### Offenbarung der Erfindung

Der Erfindung liegt die Aufgabe zugrunde, ein Verfahren zum Netzwerkmanagement und ein Telekommunikationsnetzwerk für das Netzwerkmanagement anzugeben, wobei eine Verbesserung des Netzwerkmanagements durch Abstraktion der Zustände einer Netzwerkverbindung von der Netzwerkinfrastruktur des Telekommunikationsnetzwerks realisiert wird.

Diese Aufgabe wird erfindungsgemäß gelöst durch ein Verfahren zum Netzwerkmanagement eines Telekommunikationsnetzwerkes, wobei das Verfahren folgende Verfahrensschritte umfasst:
-- Herstellen einer Netzwerkverbindung zwischen einem Gerät und dem Telekommunikationsnetzwerk, wobei der Netzwerkverbindung ein Setup-Status zugewiesen wird, wobei der Setup-Status mit einer Betriebsunterstützung durch einen Telekommunikationsnetzbetreiber des Telekommunikationsnetzwerkes zusammenhängt,
-- Durchführen eines ersten Statusübergangs der Netzwerkverbindung aus dem Setup-Status in einen Default-Status, wobei in dem ersten Statusübergang die Netzwerkverbindung initialisiert wird,
-- Durchführen eines zweiten Statusübergangs der Netzwerkverbindung aus dem Default-Status in einen benutzerspezifischen Status, wobei in dem zweiten Statusübergang die Netzwerkverbindung derart konfiguriert wird, dass in dem benutzerspezifischen Status einer mit der Netzwerkverbindung assoziierten Internetprotokollverbindung eine dedizierte Funktionalitätsstufe durch implizite Authentifizierung des Benutzers des Geräts zuweisbar ist.

Es ist dadurch gemäß der vorliegenden Erfindung in vorteilhafter Weise möglich, dass ein einheitliches Zustandsmodell (State Model) für das Netzwerkmanagement des Telekommunikationsnetzwerkes - insbesondere für das Management der Netzwerkverbindung - verwendet wird. Hierdurch wird insbesondere ein universelles Verfahren zum Netzwerkmanagement bereitgestellt - d.h. das Verfahren zum Netzwerkmanagement, insbesondere Profile-Management, ist unabhängig von der Netzwerkinfrastruktur des Telekommunikationsnetzwerkes anwendbar. Beispielsweise wird für die Netzwerkverbindung eine Festnetzverbindung und/oder eine Mobilfunkverbindung verwendet, sodass ein einheitliches Zustandsmodell (State Model) für das Netzwerkmanagement des Telekommunikationsnetzwerkes - insbesondere für das Management der Netzwerkverbindung - unabhängig von der zugrundeliegenden Netzwerkinfrastruktur des Telekommunikationsnetzwerkes bereitgestellt wird.

Erfindungsgemäß bevorzugt wird das Gerät zur Herstellung einer IP-Verbindung konfiguriert. Beispielsweise ist das Gerät ein zur Anfrage einer IP-Adresse - beispielsweise zum Verbindungsaufbau mittels PPP (Point-to-Point-Protocol) oder DHCP (Dynamic Host Configuration Protocol) - konfiguriertes Anfragegerät und/oder ein Gerät, welches zur Verarbeitung von publizierten IP-Informationen - beispielsweise RA (Router Advertisement) - konfiguriert ist. Beispielsweise ist das Gerät ein Router.

Erfindungsgemäß besonders bevorzugt wird der Setup-Status zur Betriebsunterstützung des Telekommunikationsnetzwerks genutzt. Das bedeutet insbesondere, dass eine Statusinformation bezüglich des Setup-Status - durch einen Telekommunikationsnetzbetreiber (Operator) des Telekommunikationsnetzwerkes betriebsunterstützend (beispielsweise zur Unterstützung des Service-Managements) genutzt werden kann und/oder genutzt wird. Der Setup-Status ist insbesondere ein betrieblicher Status, in dem nur der Operator das Telekommunikationsnetzwerkes oder Teile davon unterstützend nutzen kann bzw. nutzt. Aus Sicht eines Endnutzers ist dies beispielsweise ein Fehlerfall (d.h. Fehlerzustand bzw. Fehlerstatus).

Erfindungsgemäß bevorzugt wird die Netzwerkverbindung in dem ersten Statusübergang initialisiert - d.h. die Netzwerkverbindung wird derart konfiguriert, dass die Netzwerkverbindung in dem Default-Status durch einen (externen) Benutzer des Geräts initial nutzbar ist. Weiterhin bevorzugt bedeutet "initial nutzbar", dass eine Netzwerkidentifikationsinformation (d.h. insbesondere zur Identifikation der Netzwerkverbindung) einem Telekommunikationsdienstanbieter (Provider) in dem ersten Statusübergang zugewiesen wurde und/oder in dem Default-Status (durch den Benutzer) zuweisbar ist. Der Default-Status bezieht sich insbesondere auf einen Fall, dass der (externe) Benutzer das Telekommunikationsnetzwerk bereits initial nutzen kann - d.h. beispielsweise, dass der Benutzer den Provider auswählen kann, dort Kunde werden kann oder andere providerspezifische Konfigurationen durchführen kann. Der benutzerspezifische Status steht beispielsweise mit einem Vertragsschluss des Benutzers mit dem (ausgewählten) Provider in Zusammenhang.

Erfindungsgemäß bevorzugt wird die Netzwerkverbindung derart konfiguriert, dass in jedem Status - d.h. in dem Setup-Status, Default-Status und benutzerspezifischen Status (bzw. personalisierten Status) - der Netzwerkverbindung eine Internetprotokollverbindung (IP-Verbindung) zumindest mit eingeschränkter Funktionalität über die Netzwerkverbindung herstellbar ist. Bevorzugt wird zur Herstellung der IP-Verbindung über die Netzwerkverbindung nur eine Netzidentifikationsinformation verwendet und insbesondere keine (zur Identifikation des Benutzers des Geräts konfigurierte) Benutzeridentifikationsinformation verwendet (implizite Authentifizierung). Insbesondere wird die Benutzeridentifikationsinformation auch als Nutzer-Identität bezeichnet. Insbesondere ist die Netzidentifikationsinformation zur Identifikation eines mit der Netzwerkverbindung in Beziehung stehenden Teilnetzwerks des Telekommunikationsnetzwerkes (d.h. Netz-Identität bzw. Identität des Teilnetzwerks der zugrundeliegenden Netzwerkverbindung) und/oder zur Identifikation der Netzwerkverbindung (d.h. Netzwerkverbindungsidentifikationsinformation) konfiguriert. Insbesondere bezieht sich Netz-Identität dabei auf einen technisch abgeleiteten Identifier auf einem Home-Gateway bzw. auf eine Remote Agent Funktion auf einem Zugangsknoten des Telekommunikationsnetzwerk - beispielsweise bei einer Point-to-Point-Protocol (PPP-)Verbindung oder Dynamic Host Configuration Protocol (DHCP-) Verbindung (in sogenannten "dial-up"-Szenarien) bzw. auf eine statische Konfiguration bezüglich einer Router-Schnittstelle (bei statisch konfigurierten Netzwerken).

Erfindungsgemäß bevorzugt bedeutet, dass in dem benutzerspezifischen Status einer mit der Netzwerkverbindung assoziierten Internetprotokollverbindung eine dedizierte Funktionalitätsstufe durch implizite Authentifizierung eines Benutzers des Geräts "zuweisbar" ist, dass die dedizierte Funktionalitätsstufe entweder einer bereits hergestellten IP-Verbindung (welcher bereits eine gegenüber der dedizierten Funktionalitätsstufe eingeschränkte Funktionalitätsstufe oder eine andere Funktionalitätsstufe zugewiesen ist) zugewiesen wird oder eine neue IP-Verbindung mit der dedizierten Funktionalitätsstufe (neu) hergestellt wird. Bevorzugt ist die dedizierte Funktionalitätsstufe eine vertragsabgeleitete Funktionalitätsstufe, besonders bevorzugt eine benutzerspezifische Funktionalitätsstufe. Insbesondere wird die vertragsabgeleitete Funktionalitätsstufe (in dem zweiten Statusübergang) nach der Authentifizierung des Benutzers identifiziert bzw. zugewiesen. Insbesondere bedeutet "implizite Authentifizierung", dass eine Authentifizierung des Benutzers des Geräts auf Basis einer - beispielsweise in einem zuvor durchgeführten Authentifizierungsprozess - im Telekommunikationsnetzwerk existierenden - d.h. beispielsweise gespeicherten - Authentifizierungsinformation (sog. Vertrauensbeziehung bzw. "trusted relationship") zwischen dem Benutzer des Geräts und dem Telekommunikationsnetzwerk erfolgt. Insbesondere bedeutet "Zuweisen der dedizierten Funktionalitätsstufe", dass die IP-Verbindung in Abhängigkeit wenigstens eines (im Telekommunikationsnetzwerk gespeicherten) benutzerspezifischen Netzwerkprofils (Nutzer-Profil) konfiguriert wird, wobei das wenigstens eine benutzerspezifische Netzwerkprofil insbesondere eine Konfigurationsinformation bezüglich einer Konfiguration der Netzwerkverbindung und/oder bezüglich einer Berechtigung des Benutzers für bestimmte Dienste aufweist. Insbesondere wird dies dadurch erreicht, dass das Nutzer-Profil auf ein (auf zur Konfiguration der Netzwerkverbindung vorgesehenes) verbindungsspezifische Netzwerkprofil kopiert und/oder vererbt wird.

Erfindungsgemäß ist es bevorzugt, dass die Netzwerkverbindung in dem zweiten Statusübergang derart konfiguriert wird, dass in dem benutzerspezifischen Status der Netzwerkverbindung die dedizierte Funktionalitätsstufe der Internetprotokollverbindung zugewiesen wird, wenn der Benutzer des Geräts durch implizite Authentifizierung authentifiziert wird.

Hierdurch ist es vorteilhaft möglich, in besonders einfacher und effizienter Weise (beispielsweise ohne Passwort oder Eingabe sonstiger Benutzerdaten) die IP-Verbindung gemäß der dedizierten Funktionalitätsstufe zu etablieren und/oder zu konfigurieren. Die Authentifizierungsinformation umfasst beispielsweise eine Verknüpfung der Netzidentifikationsinformation mit der (auf den Benutzer des Geräts hinweisenden) Benutzeridentifikationsinformation. Insbesondere wird die dedizierte Funktionalitätsstufe der IP-Verbindung nur durch implizite Authentifizierung zugwiesen. Beispielsweise wird für die implizite Authentifizierung des Benutzers eine Netzwerkidentifikationsinformation im technischen Prozess der Authentifizierung genutzt, wobei der Benutzer zur Netzwerkidentifikationsinformation föderiert - d.h. insbesondere (vertraglich und/oder relational) verknüpft - ist.

Erfindungsgemäß ist es ferner bevorzugt vorgesehen, dass die Internetprotokollverbindung über die Netzwerkverbindung hergestellt wird, wobei
-- der Internetprotokollverbindung eine Setup-Funktionalitätsstufe zur Initialisierung der Netzwerkverbindung zugewiesen wird, wenn die Netzwerkverbindung den Setup-Status aufweist, und/oder
-- der Internetprotokollverbindung eine Default-Funktionalitätsstufe zur Konfiguration der Netzwerkverbindung zugewiesen wird, wenn die Netzwerkverbindung den Default-Status aufweist und/oder
-- der Internetprotokollverbindung die dedizierte Funktionalitätsstufe zugewiesen wird, wenn die Netzwerkverbindung den benutzerspezifischen Status aufweist, wobei die dedizierte Funktionalitätsstufe insbesondere eine vertragsabgeleitete Funktionalitätsstufe ist.

Hierdurch ist es erfindungsgemäß in vorteilhafter Weise möglich, dass für jeden Status - d.h. für den Setup-Status, den Default-Status und den benutzerspezifischen Status - der Netzwerkverbindung eine Internetprotokollverbindung zumindest mit eingeschränkter Funktionalitätsstufe herstellbar ist. Eingeschränkte Funktionalitätsstufe bedeutet insbesondere, dass die Internetprotokollverbindung eingeschränkt nutzbar ist, wobei beispielsweise der Zugriff auf einen bestimmten IP-Adressraum eingeschränkt ist. Beispielsweise ist die IP-Verbindung bei zugewiesener Setup-Funktionalitätsstufe (nur) zur Initialisierung (d.h. zur Bereitstellung der Konfigurationsmöglichkeit der Netzwerkverbindung im Default-Status) und/oder bei zugewiesener Default-Funktionalitätsstufe (nur) zur Konfiguration bzw. Personalisierung der Netzwerkverbindung (d.h. zum Bereitstellen der benutzerspezifischen Funktionalität durch implizite Authentifizierung) nutzbar. Weiterhin wird nach erfolgter Authentifizierung des Benutzers des Geräts im benutzerspezifischen Status der Netzwerkverbindung der IP-Verbindung die (gegenüber der eingeschränkten Funktionalitätsstufe erweiterte) dedizierte Funktionalitätsstufe zugewiesen.

Erfindungsgemäß ist es ferner bevorzugt vorgesehen, dass in dem ersten Statusübergang eine Netzidentifikationsinformation durch das Telekommunikationsnetzwerk bereitgestellt wird, wobei insbesondere entweder
-- die Netzidentifikationsinformation einem Telekommunikationsdienstanbieter in dem ersten Statusübergang, insbesondere vorab, zugewiesen wird oder
-- die Netzwerkverbindung in dem ersten Statusübergang derart konfiguriert wird, dass der Telekommunikationsdienstanbieter durch den Benutzer des Geräts in dem Default-Status auswählbar ist und insbesondere somit die Netzidentifikationsinformation einem Telekommunikationsdienstanbieter zugwiesen wird.

Hierdurch ist es erfindungsgemäß in vorteilhafter Weise möglich, dass die Netzidentifikationsinformation dem Telekommunikationsdienstanbieter (Provider)bekanntgemacht wird, sodass durch den Provider die IP-Verbindung mit der zugewiesenen dedizierten Funktionalitätsstufe (nach erfolgter Authentifizierung) dem Benutzer des Geräts bereitstellbar ist bzw. bereitgestellt wird. Bevorzugt wird in dem ersten Statusübergang eine Netzidentifikationsinformation - beispielsweise durch den Telekommunikationsnetzbetreiber des Telekommunikationsnetzwerks - bereitgestellt und die Netzidentifikationsinformation einem Telekommunikationsdienstanbieter in dem ersten Statusübergang - vorab - d.h. beispielsweise zeitlich vor dem zweiten Statusübergang - zugewiesen. Alternativ ist der Telekommunikationsdienstanbieter durch den Benutzer des Geräts in dem Default-Status auswählbar, sodass insbesondere die Netzidentifikationsinformation einem Telekommunikationsdienstanbieter durch Auswahl des Telekommunikationsdienstanbieters zugwiesen wird.

Erfindungsgemäß ist es ferner bevorzugt vorgesehen, dass die Netzidentifikationsinformation in dem Telekommunikationsnetzwerk inventarisiert wird, wobei insbesondere die Netzidentifikationsinformation in dem ersten Statusübergang bei dem Telekommunikationsnetzbetreiber inventarisiert wird und/oder wobei die Netzidentifikationsinformation in dem ersten und/oder zweiten Statusübergang in einer Datenbank des Telekommunikationsdienstanbieters inventarisiert wird.

Hierdurch ist es erfindungsgemäß in vorteilhafter Weise möglich, dass der Netzwerkverbindung ein providerspezifischer Status (Default-Status) durch Bereitstellen der inventarisierten Netzidentifikationsinformation zuweisbar ist bzw. zugewiesen wird. Der Telekommunikationsnetzbetreiber des Telekommunikationsnetzwerkes wird auch als Operator bezeichnet, wobei der Operator das Telekommunikationsnetzwerk betreibt. Der Telekommunikationsdienstanbieter wird auch als Provider bezeichnet, wobei der Provider beispielsweise einem Dritten bzw. einem Benutzer einen Zugang zum Telekommunikationsnetzwerk bereitstellt. Erfindungsgemäß bevorzugt umfasst der Setup-Status einen Status (Netzwerkkonfigurationszustand), bei dem beim Operator noch keine Inventarisierung erfolgt ist und der Setup-Status (nur) zur betrieblichen Unterstützung verwendet wird. Erst nach der Inventarisierung der Netzidentifikationsinformation beim Operator kann der Netzwerkverbindung ein dedizierter Provider zugewiesen werden oder die Möglichkeit gegeben werden, einen Provider durch den Dritten bzw. den Benutzer auswählbar zu machen (Default-Status). Besonders bevorzugt erfolgt die Inventarisierung der Netzidentifikationsinformation beim Provider bei der Festlegung des Providers (d.h. während des ersten Statusübergangs) und/oder bei der Verknüpfung der Netzidentifikationsinformation mit der Benutzeridentifikationsinformation (d.h. während des zweiten Statusübergangs).

Erfindungsgemäß ist es ferner bevorzugt vorgesehen, dass in dem zweiten Statusübergang eine Benutzeridentifikationsinformation zur Identifikation eines Benutzers des Geräts an das Telekommunikationsnetzwerk bereitgestellt wird, wobei die Benutzeridentifikationsinformation insbesondere über die Netzwerkverbindung vom Gerät an das Telekommunikationsnetzwerk übertragen wird..

Hierdurch ist es erfindungsgemäß in vorteilhafter Weise möglich, dass sich ein Kunde bzw. Benutzer mittels eines (geeigneten) Authentifizierungsverfahrens bei dem Telekommunikationsnetzwerk (beispielsweise einem Portal) in dem Default-Status der Netzwerkverbindung anmelden kann, sodass nach erfolgreicher Authentifizierung von Netzidentifikationsinformation und Benutzeridentifikationsinformation (in dem zweiten Statusübergang) ein benutzerspezifisches Netzwerkprofil (mit Bezug zur Benutzeridentifikationsinformation) auf ein verbindungsspezifisches Netzwerkprofil (mit Bezug zur Netzwerkverbindung) kopiert und/oder vererbt wird. Beispielsweise erfolgt die Authentifizierung in dem Default-Status dadurch, dass sich der Benutzer mit der Benutzeridentifikationsinformation - bzw. Benutzerdaten wie beispielsweise Benutzername, Passwort, Persönliche Identifikationsnummer (PIN) und/oder Transaktionsnummer (TAN) - unabhängig von der Netzwerkverbindung bei dem Portal des Telekommunikationsnetzwerkes anmeldet und authentifiziert wird (explizite Authentifizierung). Bevorzugt ist die Benutzeridentifikationsinformation nicht in dem Gerät gespeichert, sondern wird beispielsweise von dem Benutzer auf einem Portal des Providers eingegeben. Insbesondere sind keine benutzerspezifischen Daten in dem Gerät gespeichert.

Erfindungsgemäß ist es ferner bevorzugt vorgesehen, dass in dem zweiten Statusübergang durch das Telekommunikationsnetzwerk die Netzidentifikationsinformation ermittelt wird, wobei die Netzidentifikationsinformation insbesondere in Abhängigkeit der Übermittlung der Benutzeridentifikationsinformation ermittelt wird.

Hierdurch ist es erfindungsgemäß in vorteilhafter Weise möglich, dass die Netzidentifikationsinformation beispielsweise automatisch durch das Telekommunikationsnetzwerk - insbesondere durch eine sogenannte Connectivity-Session-Location-and-Repository-Funktion (CLF) - ermittelt wird.

Erfindungsgemäß ist es ferner bevorzugt vorgesehen, dass in dem zweiten Statusübergang eine Authentifizierungsinformation derart erzeugt wird, dass die Authentifizierungsinformation eine Information bezüglich einer Verknüpfung zwischen der Benutzeridentifikationsinformation und der Netzidentifikationsinformation aufweist, wobei die Authentifizierungsinformation in dem Telekommunikationsnetzwerk gespeichert wird.

Hierdurch ist es erfindungsgemäß in vorteilhafter Weise möglich, dass durch implizite Authentifizierung des Benutzers in besonders einfacher und effizienter Weise (beispielsweise ohne Passwort oder Eingabe sonstiger Benutzerdaten) die IP-Verbindung gemäß der dedizierten Funktionalitätsstufe hergestellt wird. Beispielsweise wird eine Netzwerkidentifikationsinformation zur Authentifizierung derart genutzt, dass der Benutzer in Abhängigkeit einer Föderierung des Benutzers mit der Netzwerkidentifikationsinformation implizit authentifiziert wird.

Erfindungsgemäß ist es ferner bevorzugt vorgesehen, dass wenigstens ein benutzerspezifisches Netzwerkprofil bezüglich des Benutzers des Geräts im Telekommunikationsnetzwerk gespeichert wird, wobei in dem zweiten Statusübergang ein verbindungsspezifisches Netzwerkprofil bezüglich der Netzwerkverbindung mit dem wenigstens einen benutzerspezifischen Netzwerkprofil assoziiert wird, wobei insbesondere das wenigstens eine benutzerspezifische Netzwerkprofil auf das verbindungsspezifische Netzwerkprofil kopiert und/oder vererbt wird.

Hierdurch ist es erfindungsgemäß in vorteilhafter Weise möglich, dass ein einheitliches Zustandsmodell für das Netzwerkmanagement des Telekommunikationsnetzwerkes - insbesondere für das Verknüpfen der Netzwerkverbindung mit dem benutzerspezifischen Netzwerkprofil - verwendet wird.

Ein weiterer Gegenstand der vorliegenden Erfindung ist ein Telekommunikationsnetzwerk für das Netzwerkmanagement, wobei das Telekommunikationsnetzwerk zum Herstellen einer Netzwerkverbindung zwischen einem Gerät und dem Telekommunikationsnetzwerk konfiguriert ist, wobei das Telekommunikationsnetzwerk derart konfiguriert ist, dass der Netzwerkverbindung ein Setup-Status zuweisbar ist, wobei der Setup-Status mit einer Betriebsunterstützung durch einen Telekommunikationsnetzbetreiber des Telekommunikationsnetzwerkes zusammenhängt, wobei das Telekommunikationsnetzwerk zum Durchführen eines ersten Statusübergangs der Netzwerkverbindung aus dem Setup-Status in einen Default-Status konfiguriert ist, wobei das Telekommunikationsnetzwerk derart konfiguriert ist, dass die Netzwerkverbindung in dem Default-Status initialisierbar ist, wobei das Telekommunikationsnetzwerk zum Durchführen eines zweiten Statusübergangs der Netzwerkverbindung aus dem Default-Status in einen benutzerspezifischen Status konfiguriert ist, wobei in dem zweiten Statusübergang die Netzwerkverbindung derart konfiguriert ist, dass in dem benutzerspezifischen Status einer mit der Netzwerkverbindung assoziierten Internetprotokollverbindung eine dedizierte Funktionalitätsstufe durch implizite Authentifizierung eines Benutzers des Geräts zuweisbar ist.

Es ist dadurch gemäß der vorliegenden Erfindung in vorteilhafter Weise möglich, dass ein einheitliches Zustandsmodell (State Model) für das Netzwerkmanagement des Telekommunikationsnetzwerkes - insbesondere für das Management der Netzwerkverbindung - verwendet wird.

Erfindungsgemäß ist es ferner bevorzugt - insbesondere im Hinblick auf das Telekommunikationsnetz -, dass die Netzwerkverbindung eine Festnetzverbindung und/oder eine Mobilfunkverbindung umfasst.

Hierdurch ist es erfindungsgemäß in vorteilhafter Weise möglich, dass ein einheitliches Zustandsmodell (State Model) für das Netzwerkmanagement des Telekommunikationsnetzwerkes - insbesondere für das Management der Netzwerkverbindung - unabhängig von der zugrundeliegenden Netzwerkinfrastruktur des Telekommunikationsnetzwerkes verwendet wird bzw. verwendbar ist.

Ferner ist es - insbesondere im Hinblick auf das Telekommunikationsnetz - erfindungsgemäß bevorzugt, dass das Telekommunikationsnetzwerk eine Konfigurationskomponente aufweist, wobei die Konfigurationskomponente derart konfiguriert ist, dass die Netzidentifikationsinformation automatisch ermittelt wird, wobei die Netzidentifikationsinformation insbesondere in Abhängigkeit einer Übermittlung einer Benutzeridentifikationsinformation über die Netzwerkverbindung ermittelt wird.

Hierdurch ist es vorteilhaft möglich, dass die Konfigurationskomponente eine Hardwarekomponente oder Softwarekomponente, beispielsweise eine sogenannte Connectivity-Session-Location-and-Repository-Funktion (CLF), umfasst.

Ferner ist es - insbesondere im Hinblick auf das Telekommunikationsnetz - erfindungsgemäß bevorzugt, dass wenigstens ein benutzerspezifisches Netzwerkprofil bezüglich des Benutzers des Geräts im Telekommunikationsnetzwerk gespeichert ist, wobei in dem benutzerspezifischen Status ein verbindungsspezifisches Netzwerkprofil bezüglich der Netzwerkverbindung mit dem wenigstens einen benutzerspezifischen Netzwerkprofil assoziiert ist.

Ferner bezieht sich die vorliegende Erfindung auch auf ein Computerprogramm mit Programmcodemitteln, mit deren Hilfe alle Schritte eines erfindungsgemäßen Verfahrens durchführbar sind, wenn das Computerprogramm auf einer programmierbaren Einrichtung, insbesondere in Teilen auf mehreren programmierbaren Einrichtungen, eines Telekommunikationsnetzes, ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte eines erfindungsgemäßen Verfahrens durchführbar sind, wenn das Computerprogramm auf einer programmierbaren Einrichtung, insbesondere in Teilen auf mehreren programmierbaren Einrichtungen, eines Telekommunikationsnetzes, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines erfindungsgemäßen Telekommunikationsnetzwerks.
- **Figur 2**: zeigt eine schematische Ansicht eines erfindungsgemäßen Verfahrens zum Netzwerkmanagement eines Telekommunikationsnetzwerks.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

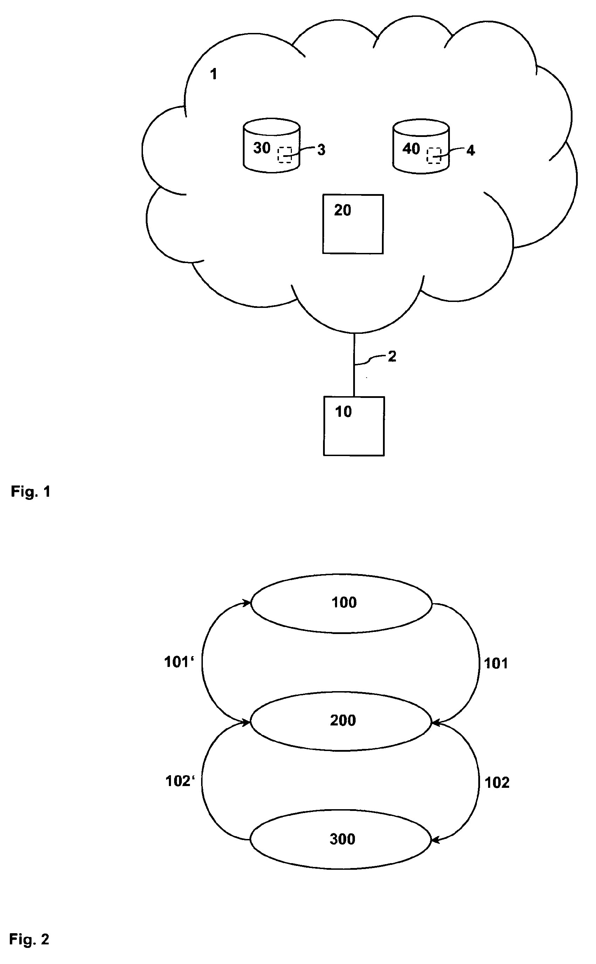

In Figur 1 ist schematisch eine Ansicht eines erfindungsgemäßen Telekommunikationsnetzwerkes 1 dargestellt, wobei ein Gerät 10 über die Netzwerkverbindung 2 mit dem Telekommunikationsnetzwerk 1 verbunden ist. Die Netzwerkverbindung 2 ist beispielsweise eine kabellose Netzwerkverbindung (beispielsweise eine Mobilfunkverbindung) oder eine kabelgebundene Netzwerkverbindung (beispielsweise eine Festnetzverbindung). Das Gerät 10 ist insbesondere zur Herstellung einer IP-Verbindung über die Netzwerkverbindung 2 konfiguriert. Beispielsweise ist das Gerät 10 ein Router in einem Heimnetzwerk des Benutzers.

Die Netzwerkverbindung 2 ist durch eine Netzidentifikationsinformation identifizierbar, wobei die Netzidentifikationsinformation insbesondere zur (eindeutigen) Identifikation der Netzwerkverbindung 2 und/oder zur Identifikation des mit der Netzwerkverbindung 2 zusammenhängenden Teilnetzwerkes des Telekommunikationsnetzwerkes konfiguriert ist. Hier ist die Netzidentifikationsinformation im Telekommunikationsnetzwerk 1 gespeichert und dient insbesondere zur Herstellung einer IP-Verbindung (zumindest mit einer eingeschränkten Funktionalität bzw. Funktionalitätsstufe bzw. Nutzerbarkeit) über die Netzwerkverbindung 2. Zur Herstellung der IP-Verbindung wird nur die Netzidentifikationsinformation verwendet und insbesondere keine Benutzeridentifikationsinformation (durch die der Benutzer des Geräts 10 identifizierbar ist). Durch implizite Authentifizierung des Benutzers ist der IP-Verbindung insbesondere eine erweiterte Funktionalitätsstufe durch das Telekommunikationsnetzwerk 1 zuweisbar, wenn eine Authentifizierungsinformation (mit einer Information bezüglich einer Relation bzw. Verknüpfung zwischen der Benutzeridentifikationsinformation und der Netzidentifikationsinformation) im Telekommunikationsnetzwerk 1 existiert.

Das Telekommunikationsnetzwerk 1 weist hier eine Konfigurationskomponente 20 auf. Die Konfigurationskomponente 20 ist beispielsweise eine Hardwarekomponente oder Softwarekomponente, durch die eine Schnittstelle zur Konfiguration der Netzwerkverbindung 2 bereitgestellt wird. Die Konfigurationskomponente 20 ist zur automatischen Ermittlung der Netzidentifikationsinformation in Abhängigkeit einer Übermittlung der Benutzeridentifikationsinformation vom Gerät 10 über die Netzwerkverbindung 2 an das Telekommunikationsnetzwerk 1 derart konfiguriert, sodass die Benutzeridentifikationsinformation mit der Netzidentifikationsinformation verknüpft werden kann.

Das Telekommunikationsnetzwerk 1 weist wenigstens ein benutzerspezifisches Netzwerkprofil 3 auf, wobei das benutzerspezifische Netzwerkprofil 3 dem Benutzer oder einem Kunden oder einem seiner Verträge zugeordnet ist (und insbesondere mit der Benutzeridentifikationsinformation verknüpft ist). Beispielsweise ist das wenigstens eine benutzerspezifische Netzwerkprofil 3 in einem Speicherelement 30 des Telekommunikationsnetzwerks 1 gespeichert ist. Insbesondere umfasst das wenigstens eine benutzerspezifische Netzwerkprofil eine Konfigurationsinformation bezüglich einer Konfiguration (d.h. insbesondere Parametrisierung) einer Netzwerkverbindung (d.h. der Netzwerkverbindung 2 oder einer anderen Netzwerkverbindung) und/oder bezüglich einer Berechtigung des Benutzers für bestimmte Dienste.

Das Telekommunikationsnetzwerk 1 weist ein verbindungsspezifisches Netzwerkprofil 4 auf, wobei das verbindungsspezifische Netzwerkprofil 4 (eindeutig) mit der Netzwerkverbindung 2 verknüpft ist. Das verbindungsspezifische Netzwerkprofil 4 ist insbesondere in einem weiteren Speicherelement 40 des Telekommunikationsnetzwerkes 1 gespeichert. Das verbindungsspezifische Netzwerkprofil 4 dient zur Konfiguration (insbesondere Parametrisierung) der Netzwerkverbindung 2 (mit welcher das verbindungsspezifische Netzwerkprofil 4 verknüpft ist).

In Figur 2 ist schematisch eine Ansicht eines erfindungsgemäßen Verfahrens zum Netzwerkmanagement eines Telekommunikationsnetzwerks 1 dargestellt, beispielsweise zum Netzwerkmanagement des in Figur 1 beschriebenen Telekommunikationsnetzwerks 1.

In dem Verfahren wird zunächst die Netzwerkverbindung 2 zwischen dem Gerät 10 und dem Telekommunikationsnetzwerk 1 hergestellt, wobei der Netzwerkverbindung 2 ein Setup-Status 100 zugewiesen wird. In dem Setup-Status 100 ist die Netzwerkverbindung 2 keinem Provider (durch welchen beispielsweise die IP-Verbindung mit erweiterter Funktionalitätsstufe dem Benutzer bereitgestellt wird) zugeordnet, wobei nur ein eingeschränkter Zugriff auf bestimmte Inhalte - beispielsweise Portale zur Festlegung des Providers oder einer Provider-Auswahl, Unterstützung zur Inventarisierung der Netzidentifikationsinformation (bei dem ausgewählten Provider) - bereitgestellt wird. Das bedeutet, dass der IP-Verbindung eine eingeschränkte Funktionalitätsstufe - hier eine Setup-Funktionalitätsstufe - zur Initialisierung der Netzwerkverbindung bereitgestellt wird. Weiterhin ist in dem Setup-Status 100 die Netzidentifikationsinformation nicht (beim Provider) inventarisiert. Beispielsweise wird nach Aufbau eines Festnetzes in dem Setup-Status 100 der Netzwerkverbindung eine IP-Verbindung über eine noch nicht inventarisierte Netzwerkverbindung bzw. über einen Netzwerkzugang hergestellt (beispielsweise wenn ein Circuit-Identifier und/oder ein Remote-Identifier fehlt und/oder eine Router-Schnittstelle dem Provider unbekannt ist). Gemäß eines alternativen Beispiels ist das Gerät 10 ein tragbares Telekommunikationsendgerät mit einem eingebauten Teilnehmer-Identitätsmodul (Subscriber Identity Module - SIM) bzw. eSIM, wobei die eSIM im Telekommunikationsnetzwerk 1 (in diesem Beispiel ein Mobilfunknetzwerk) registriert wird, wobei der eSIM aber noch kein provider-spezifisches Profil zugeordnet ist.

In einem Verfahrensschritt wird ein erster Statusübergang 101 der Netzwerkverbindung 2 aus dem Setup-Status 100 in einen Default-Status 200 durchgeführt, wobei in dem ersten Statusübergang die Netzwerkverbindung 2 initialisiert wird. Das bedeutet beispielsweise, dass in dem Default-Status 200 ein Provider durch den Benutzer auswählbar ist und/oder in dem Default-Status 200 die Netzidentifikationsinformation einem Provider bereitgestellt (d.h. bekannt gemacht bzw. zugewiesen) ist und/oder bei dem Provider inventarisierbar ist und/oder der Netzidentifikationsinformation ein provider-spezifischer Status (d.h. den Default-Status 200) zugewiesen wurde. Insbesondere muss die Netzidentifikationsinformation dediziert spätestens erst beim zweiten Statusübergang 102 dem Provider bekannt werden - d.h. insbesondere im Sinne einer Inventarisierung (also bei der Föderierung). Insbesondere wird die Netzidentifikationsinformation erst nach einem konkreten Vertragsschluss zwischen dem Benutzer und dem Telekommunikationsdienstanbieter (durch den Telekommunikationsdienstanbieter) gespeichert. Weiterhin wird in dem Default-Status 200 nur ein eingeschränkter Zugriff auf bestimmte Inhalte (beispielsweise Portale zur Registrierung des Benutzers bzw. der Netzwerkverbindung 2 bei dem Provider) über die Netzwerkverbindung 2 bereitgestellt (d.h. der mit der Netzwerkverbindung 2 verknüpften IP-Verbindung wird eine eingeschränkte Funktionalitätsstufe - hier eine Default-Funktionalitätsstufe - zugewiesen). In dem Default-Status 200 existiert insbesondere noch kein Kunden- oder Benutzerverhältnis zwischen Benutzer und Provider. Bevorzugt ist die Netzwerkverbindung 2 in dem Default-Status 200 derart konfiguriert, dass der Benutzer ein Kundenverhältnis beginnen und/oder sich mittels der Benutzeridentifikationsinformation (welche insbesondere Benutzerdaten wie Login-Daten umfasst) identifizieren kann. Beispielsweise wird die IP-Verbindung über eine dem Provider bekannten Festnetzverbindung 2 - welche beispielsweise durch einen Identifier (Netzwerkverbindungsidentifikationsinformation) auf einem Zugangsknoten oder einer Router-Schnittstelle identifizierbar ist - oder mittels eines bekannten SIM-Profils - beispielsweise eine interne Teilnehmerkennung (International Mobile Subscriber Identity - IMSI) - über eine Mobilfunkverbindung 2 hergestellt. Hierbei ist der IP-Verbindung die Default-Funktionalitätsstufe zugewiesen - d.h. insbesondere, dass für die IP-Verbindung eine eingegrenzte Umgebung (sogenannter "walled garden") definiert ist, durch welche dem Benutzer ermöglicht wird, Kundenselbstbedienungsdienste (Customer Self Services - CSS) durchzuführen.

In einem weiteren Verfahrensschritt wird ein zweiter Statusübergang 102 der Netzwerkverbindung 2 aus dem Default-Status 200 in einen benutzerspezifischen Status 300 durchgeführt, wobei in dem zweiten Statusübergang 102 die Netzwerkverbindung 2 derart konfiguriert wird, dass in dem benutzerspezifischen Status 300 einer mit der Netzwerkverbindung 2 assoziierten IP-Verbindung eine dedizierte (d.h. vertragsabgeleitete und/oder benutzerspezifische) Funktionalitätsstufe durch implizite Authentifizierung zuweisbar ist. Das bedeutet, dass die Netzidentifikationsinformation und die Benutzeridentifikationsinformation des Benutzers miteinander verknüpft sind und die benutzerspezifische Netzwerkprofilinformation 3 auf das verbindungsspezifische Netzwerkprofil 4 kopiert und/oder vererbt wurde. Beispielsweise wird dabei ein Eintrag in einem Home Subscriber Server (HSS) und/oder einem Remote-Authentication-Dial-In-User-Service (RADIUS-)Server erzeugt und/oder eine Router-Schnittstelle konfiguriert. Beispielsweise werden die zur Herstellung der IP-Verbindung (entsprechend der dedizierten Funktionalitätsstufe) benötigten Kontrollinstanzen (d.h. Netzwerkelemente) mit den Daten des authentifizierten benutzerspezifischen Netzwerkprofils aktualisiert, nachdem sich der Benutzer über das Gerät 10 (beispielsweise ein Tablet-Computer) - welches über die Netzwerkverbindung 2 (beispielsweise Mobilfunkverbindung oder Festnetzverbindung) mit dem Provider verbunden ist - beim CSS des Providers authentifiziert hat. Insbesondere werden die Kontrollinstanzen derart aktualisiert, dass die Netzwerkverbindung 2 in Abhängigkeit der benutzerspezifischen Netzwerkprofilinformation 3 konfiguriert (d.h. insbesondere parametrisiert) wird. Beispielsweise wird dadurch der IP-Verbindung ein benutzerspezifischer Status 300 zugewiesen, wobei dem Benutzer eine IP-Verbindung mit dedizierter Funktionalitätsstufe (gemäß dem benutzerspezifischen Netzwerkprofil 3) bereitgestellt wird - d.h. beispielsweise ein Zugang zum Internet, eine benutzerspezifische Dienstgüte (Quality of Service - QoS) und/oder eine benutzerspezifisches Verkehrsprofil (beispielsweise durch Verkehrsformung - Traffic-Shaping).

Der erste Statusübergang 101 umfasst insbesondere eine Möglichkeit zur Bekanntmachung (d.h. Übertragung) der Netzidentifikationsinformation vom Telekommunikationsnetzwerk an den Provider (eines Festnetzdienstes oder Mobilfunkdienstes) des Telekommunikationsnetzwerks 1. Beispielsweise wird die Bekanntmachung an den Provider durch den Operator durchgeführt (d.h. beispielsweise initiiert). Alternativ oder kumulativ umfasst der erste Statusübergang 101 eine Konfiguration der Netzwerkverbindung derart, dass in dem Default-Status 200 ein Provider durch den Benutzer auswählbar ist. Der zweite Statusübergang 102 wird beispielsweise bei einem Einzug des Benutzers in eine Wohnung (im Falle des Festnetzdienstes) oder einer Registrierung einer - beispielsweise in einem Teilnehmeridentitätsmodul (einer SIM-Karte oder eSIM) gespeicherten - Teilnehmeridentitätsinformation durch den Benutzer (im Falle des Mobilfunkdienstes) initiiert. Bevorzugt umfasst der zweite Statusübergang 102 (im Fall des Mobilfunkdienstes) das Aktivieren eines providerspezifischen Profils für das Teilnehmeridentitätsmodul. Weiterhin wird beispielsweise ein weiterer zweiter Statusübergang 102' der Netzwerkverbindung 2 aus dem benutzerspezifischen Status 300 in den Default-Status 200 durch den Benutzer initiiert, wenn der Benutzer aus der Wohnung auszieht oder das Teilnehmeridentitätsmodul (d.h. die SIM-Karte oder e-SIM) de-registriert wird. Bevorzugt umfasst der weitere zweite Statusübergang 102' (im Fall des Mobilfunkdienstes) die Möglichkeit zur Deaktivierung des providerspezifischen Profils für das Teilnehmeridentitätsmodul. Ferner wird ein weiterer erster Statusübergang 101' von dem Default-Status 200 in den Setup-Status 100 durchgeführt, wenn beispielsweise die Netzidentifikationsinformation beim Operator gelöscht wird.

## Patentansprüche

1. Verfahren zum Netzwerkmanagement eines Telekommunikationsnetzwerkes (1), wobei das Verfahren folgende Verfahrensschritte umfasst:
-- Herstellen einer Netzwerkverbindung (2) zwischen einem Gerät (10) und dem Telekommunikationsnetzwerk (1), wobei der Netzwerkverbindung (2) ein Setup-Status (100) zugewiesen wird, wobei der Setup-Status (100) mit einer Betriebsunterstützung durch einen Telekommunikationsnetzbetreiber des Telekommunikationsnetzwerkes (1) zusammenhängt,
-- Durchführen eines ersten Statusübergangs (101) der Netzwerkverbindung (2) aus dem Setup-Status (100) in einen Default-Status (200), wobei in dem ersten Statusübergang die Netzwerkverbindung initialisiert wird,
-- Durchführen eines zweiten Statusübergangs (102) der Netzwerkverbindung (2) aus dem Default-Status (200) in einen benutzerspezifischen Status (300), wobei in dem zweiten Statusübergang (102) die Netzwerkverbindung derart konfiguriert wird, dass in dem benutzerspezifischen Status (300) einer mit der Netzwerkverbindung (2) assoziierten Internetprotokollverbindung eine dedizierte Funktionalitätsstufe durch implizite Authentifizierung zuweisbar ist.

2. Verfahren nach Anspruch 1, **dadurch gekennzeichnet, dass** die Netzwerkverbindung (2) in dem zweiten Statusübergang (102) derart konfiguriert wird, dass in dem benutzerspezifischen Status (300) der Netzwerkverbindung (2) die dedizierte Funktionalitätsstufe der Internetprotokollverbindung zugewiesen wird, wenn der Benutzer des Geräts (10) durch implizite Authentifizierung authentifiziert wird.

3. Verfahren nach einem der vorhergehenden Ansprüche, **dadurch gekennzeichnet, dass** in dem ersten Statusübergang (101) eine Netzidentifikationsinformation durch das Telekommunikationsnetzwerk (1) bereitgestellt wird, wobei insbesondere entweder
-- die Netzidentifikationsinformation einem Telekommunikationsdienstanbieter in dem ersten Statusübergang (101) vorab zugewiesen wird oder
-- die Netzwerkverbindung (2) in dem ersten Statusübergang (101) derart konfiguriert wird, dass der Telekommunikationsdienstanbieter durch den Benutzer des Geräts (10) in dem Default-Status (200) auswählbar ist und insbesondere somit die Netzidentifikationsinformation einem Telekommunikationsanbieter zugwiesen wird.

4. Verfahren nach einem der vorhergehenden Ansprüche, **dadurch gekennzeichnet, dass** die Netzidentifikationsinformation in dem Telekommunikationsnetzwerk (1) inventarisiert wird, wobei insbesondere die Netzidentifikationsinformation in dem ersten Statusübergang (101) bei dem Telekommunikationsnetzbetreiber inventarisiert wird und/oder wobei die Netzidentifikationsinformation in dem ersten und/oder zweiten Statusübergang (102) in einer Datenbank des Telekommunikationsdienstanbieters inventarisiert wird.

5. Verfahren nach einem der vorhergehenden Ansprüche, **dadurch gekennzeichnet, dass** in dem zweiten Statusübergang (102) eine Benutzeridentifikationsinformation zur Identifikation eines Benutzers des Geräts (10) an das Telekommunikationsnetzwerk (1) bereitgestellt wird, wobei die Benutzeridentifikationsinformation insbesondere über die Netzwerkverbindung (2) vom Gerät (10) an das Telekommunikationsnetzwerk (1) übertragen wird.

6. Verfahren nach einem der vorhergehenden Ansprüche, **dadurch gekennzeichnet, dass** in dem zweiten Statusübergang durch das Telekommunikationsnetzwerk (1) die Netzidentifikationsinformation ermittelt wird, wobei die Netzidentifikationsinformation insbesondere in Abhängigkeit der Übermittlung der Benutzeridentifikationsinformation ermittelt wird.

7. Verfahren nach einem der vorhergehenden Ansprüche, **dadurch gekennzeichnet, dass** in dem zweiten Statusübergang (102) die Authentifizierungsinformation derart erzeugt wird, dass die Authentifizierungsinformation eine Information bezüglich einer Relation zwischen der Benutzeridentifikationsinformation und der Netzidentifikationsinformation aufweist, wobei die Authentifizierungsinformation in dem Telekommunikationsnetzwerk (1) gespeichert wird.

8. Verfahren nach einem der vorhergehenden Ansprüche, **dadurch gekennzeichnet, dass** wenigstens ein benutzerspezifisches Netzwerkprofil (3) bezüglich des Benutzers des Geräts (10) im Telekommunikationsnetzwerk (1) gespeichert wird, wobei in dem zweiten Statusübergang (102) ein verbindungsspezifisches Netzwerkprofil (4) bezüglich der Netzwerkverbindung (2) mit dem wenigstens einen benutzerspezifischen Netzwerkprofil (3) assoziiert wird, wobei insbesondere das wenigstens eine benutzerspezifische Netzwerkprofil (3) auf das verbindungsspezifische Netzwerkprofil (4) kopiert und/oder vererbt wird.

9. Telekommunikationsnetzwerk (1) für das Netzwerkmanagement, wobei das Telekommunikationsnetzwerk zum Herstellen einer Netzwerkverbindung (2) zwischen einem Gerät (10) und dem Telekommunikationsnetzwerk (1) konfiguriert ist, wobei das Telekommunikationsnetzwerk (2) derart konfiguriert ist, dass der Netzwerkverbindung (2) ein Setup-Status (100) zuweisbar ist, wobei der Setup-Status (100) mit einer Betriebsunterstützung durch einen Telekommunikationsnetzbetreiber des Telekommunikationsnetzwerkes (1) zusammenhängt, wobei das Telekommunikationsnetzwerk (2) zum Durchführen eines ersten Statusübergangs (101) der Netzwerkverbindung (2) aus dem Setup-Status (100) in einen Default-Status (200) konfiguriert ist, wobei das Telekommunikationsnetzwerk (1) derart konfiguriert ist, dass die Netzwerkverbindung (2) in dem Default-Status (200) initialisierbar ist, wobei das Telekommunikationsnetzwerk (1) zum Durchführen eines zweiten Statusübergangs (102) der Netzwerkverbindung (2) aus dem Default-Status (200) in einen benutzerspezifischen Status (300) konfiguriert ist, wobei in dem zweiten Statusübergang (102) die Netzwerkverbindung (2) derart konfiguriert ist, dass in dem benutzerspezifischen Status (300) einer mit der Netzwerkverbindung (2) assoziierten Internetprotokollverbindung eine dedizierte Funktionalitätsstufe durch implizite Authentifizierung eines Benutzers des Geräts (10) zuweisbar ist.

10. Telekommunikationsnetzwerk (1) nach Anspruch 9, **dadurch gekennzeichnet, dass** die Netzwerkverbindung (2) eine Festnetzverbindung und/oder eine Mobilfunkverbindung umfasst.

11. Telekommunikationsnetzwerk (1) nach Anspruch 9 oder 10, **dadurch gekennzeichnet, dass** das Telekommunikationsnetzwerk (1) eine Konfigurationskomponente (20) aufweist, wobei die Konfigurationskomponente (20) derart konfiguriert ist, dass die Netzidentifikationsinformation automatisch ermittelt wird, wobei die Netzidentifikationsinformation insbesondere in Abhängigkeit einer Übermittlung einer Benutzeridentifikationsinformation über die Netzwerkverbindung (2) ermittelt wird.

12. Telekommunikationsnetzwerk (1) nach einem der Ansprüche 9 bis 11, **dadurch gekennzeichnet, dass** wenigstens ein benutzerspezifisches Netzwerkprofil (3) bezüglich des Benutzers des Geräts (10) im Telekommunikationsnetzwerk (1) gespeichert ist, wobei in dem benutzerspezifischen Status (300) ein verbindungsspezifisches Netzwerkprofil (4) bezüglich der Netzwerkverbindung (2) mit dem wenigstens einen benutzerspezifischen Netzwerkprofil (3) assoziiert ist.

13. Computerprogramm mit Programmcodemitteln, mit deren Hilfe alle Schritte eines Verfahrens nach einem der Ansprüche 1 bis 8 durchführbar sind, wenn das Computerprogramm auf einer programmierbaren Einrichtung, insbesondere in Teilen auf mehreren programmierbaren Einrichtungen, eines Telekommunikationsnetzes (1), ausgeführt wird.

14. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer programmierbaren Einrichtung, insbesondere in Teilen auf mehreren programmierbaren Einrichtungen, eines Telekommunikationsnetzes (100), ausgeführt wird.

## Claims

1. Method of network management of a telecommunications network (1), wherein the method comprises the following method steps:
- producing a network connection (2) between a device (10) and the telecommunications network (1), wherein the network connection (2) is allocated a setup status (100), wherein the setup status (100) is linked to an operational support by a telecommunications network operator of the telecommunications network (1),
- carrying out a first status transition (101) of the network connection (2) from the setup status (100) into a default status (200), wherein, in the first status transition, the network connection is initialised,
- carrying out a second status transition (102) of the network connection (2) from the default status (200) into a user specific status (300), wherein, in the second status transition (102), the network connection is configured in such a way that, in the user-specific status (300), a dedicated functionality step can be allocated by implicit authentication to an internet protocol connection associated with the network connection (2).

2. Method as claimed in claim 1, **characterised in that**, in the second status transition (102), the network connection (2) is configured in such a way that, in the user-specific status (300), the dedicated functionality step of the internet protocol connection is allocated to the network connection (2) when the user of the device (10) is authenticated by implicit authentication.

3. Method as claimed in any one of the preceding claims, **characterised in that**, in the first status transition (101), an item of network identification information is provided by the telecommunications network (1), wherein, in particular, either
- the network identification information item is allocated in advance to a telecommunications service provider in the first status transition (101) or
- the network connection (2) is configured in the first status transition (101) in such a way that the telecommunications service provider can be selected by the user of the device (10) in the default status (200) and, in particular, therefore, the network identification information item can be allocated to a telecommunications provider.

4. Method as claimed in any one of the preceding claims, **characterised in that** the network identification information item is inventoried in the telecommunications network (1), wherein, in particular, the network identification information item is inventoried in the first status transition (101) with the telecommunications network provider and/or wherein the network identification information item is inventoried in the first and/or second status transition (102) in a database of the telecommunications service provider.

5. Method as claimed in any one of the preceding claims, **characterised in that**, in the second status transition (102), a user identification information item for identification of a user of the device (10) is provided to the telecommunications network (1), wherein the user identification information item is transmitted, in particular, via the network connection (2) from the device (10) to the telecommunications network (1).

6. Method as claimed in any one of the preceding claims, **characterised in that**, in the second status transition, the network identification information item is determined by the telecommunications network (1), wherein the network identification information item is determined, in particular, in dependence upon the transmission of the user identification information item.

7. Method as claimed in any one of the preceding claims, **characterised in that**, in the second status transition (102), the authentication information is generated in such a way that the authentication information comprises an item of information with respect to a relation between the user identification information item and the network identification information item, wherein the authentication information is stored in the telecommunications network (1).

8. Method as claimed in any one of the preceding claims, **characterised in that** at least one user-specific network profile (3) with respect to the user of the device (10) is stored in the telecommunications network (1), wherein, in the second status transition (102), a connection-specific network profile (4) with respect to the network connection (2) is associated with the at least one user-specific network profile (3), wherein, in particular, the at least one user-specific network profile (3) is copied and/or handed over onto the connection-specific network profile (4).

9. Telecommunications network (1) for network management, wherein the telecommunications network is configured to produce a network connection (2) between a device (10) and the telecommunications network (1), wherein the telecommunications network (2) is configured in such a way that the network connection (2) can be allocated a setup status (100), wherein the setup status (100) is linked to an operational support by a telecommunications network operator of the telecommunications network (1), wherein the telecommunications network (2) is configured to carry out a first status transition (101) of the network connection (2) from the setup status (100) into a default status (200), wherein the telecommunications network (1) is configured in such a way that the network connection (2) can be initialised in the default status (200), wherein the telecommunications network (1) is configured to carry out a second status transition (102) of the network connection (2) from the default status (200) into a user-specific status (300), wherein, in the second status transition (102), the network connection (2) is configured in such a way that, in the user-specific status (300), a dedicated functionality step can be allocated by implicit authentication of a user of the device (10) to an internet protocol connection associated with the network connection (2).

10. Telecommunications network (1) as claimed in claim 9, **characterised in that** the network connection (2) comprises a landline and/or a mobile telephone connection.

11. Telecommunications network (1) as claimed in claim 9 or 10, **characterised in that** the telecommunications network (1) comprises a configuration component (20), wherein the configuration component (20) is configured in such a way that the network identification information item is determined automatically, wherein the network identification information item is determined, in particular, in dependence upon a transmission of a user identification information item via the network connection (2).

12. Telecommunications network (1) as claimed in any one of claims 9 to 11, **characterised in that** at least one user-specific network profile (3) with respect to the user of the device (10) is stored in the telecommunications network (1), wherein, in the user-specific status (300), a connection-specific network profile (4) with respect to the network connection (2) is associated with the at least one user-specific network profile (3).

13. Computer program with program code means, by means of which all steps of a method as claimed in any one of claims 1 to 8 can be carried out when the computer program is executed on a programmable device, in particular in parts on a plurality of programmable devices, of a telecommunications network (1).

14. Computer program product having a computer-readable medium and a computer program, stored on the computer-readable medium, with program code means which are suitable for carrying out all the steps of a method as claimed in any one of claims 1 to 8 when the computer program is executed on a programmable device, in particular in parts on a plurality of programmable devices, of a telecommunications network (100).

## Revendications

1. Procédé de gestion de réseau d'un réseau de télécommunications (1), lequel procédé comprend les étapes de procédé suivantes :
- établissement d'une liaison de réseau (2) entre un appareil (10) et le réseau de télécommunications (1), dans lequel un état de configuration (100) est attribué à la liaison de réseau (2), dans lequel l'état de configuration (100) est en relation avec une assistance d'exploitation par un opérateur de réseau de télécommunications du réseau de télécommunications (1),
- réalisation d'une première transition d'état (101) de la liaison de réseau (2), de l'état de configuration (100) en un état par défaut (200), dans lequel la liaison de réseau est initialisée pendant la première transition d'état,
- réalisation d'une deuxième transition d'état (102) de la liaison de réseau (2), de l'état par défaut (200) en un état (300) spécifique à l'utilisateur, dans lequel la liaison de réseau est configurée pendant la deuxième transition d'état (102) de manière à ce que dans l'état (300) spécifique à l'utilisateur, un étage de fonctionnalité dédié soit attribuable, par authentification implicite, à une liaison de protocole internet associée à la liaison de réseau (2).

2. Procédé selon la revendication 1, **caractérisé en ce que** la liaison de réseau (2) est configurée pendant la deuxième transition d'état (102) de manière à ce que dans l'état (300) spécifique à l'utilisateur de la liaison de réseau (2), l'étage de fonctionnalité dédié soit attribué à la liaison de protocole internet lorsque l'utilisateur de l'appareil (10) est authentifié par authentification implicite.

3. Procédé selon l'une quelconque des revendications précédentes, **caractérisé en ce que** pendant la première transition d'état (101), une information d'identification de réseau est fournie par le réseau de télécommunications (1), dans lequel notamment soit
- l'information d'identification de réseau est attribuée d'avance pendant la première transition d'état (101) à un fournisseur de services de télécommunications soit
- la liaison de réseau (2) est configurée pendant la première transition d'état (101) de manière à ce que le fournisseur de services de télécommunications soit sélectionnable par l'utilisateur de l'appareil (10) dans l'état par défaut (200) et notamment que l'information d'identification de réseau soit attribuée à un fournisseur de services de télécommunications.

4. Procédé selon l'une quelconque des revendications précédentes, **caractérisé en ce que** l'information d'identification de réseau est inventoriée dans le réseau de télécommunications (1), dans lequel notamment l'information d'identification de réseau est inventoriée pendant la première transition d'état (101) auprès de l'opérateur de réseau de télécommunication et/ou dans lequel l'information d'identification de réseau est inventoriée pendant la première et/ou la deuxième transitions d'état (102) dans une banque de donnée du fournisseur de services de télécommunication.

5. Procédé selon l'une quelconque des revendications précédentes, **caractérisé en ce qu'**une information d'identification d'utilisateur destinée à l'identification d'un utilisateur de l'appareil (10) est fournie au réseau de télécommunications (1) pendant la deuxième transition d'état (102), dans lequel l'information d'identification d'utilisateur est transmise au réseau de télécommunications (1) notamment par l'intermédiaire de la liaison de réseau (2) de l'appareil (10).

6. Procédé selon l'une quelconque des revendications précédentes, **caractérisé en ce que** l'information d'identification de réseau est détectée pendant la deuxième transition d'état par le réseau de télécommunications (1), dans lequel l'information d'identification de réseau est détectée notamment en fonction de la transmission de l'information d'identification d'utilisateur.

7. Procédé selon l'une quelconque des revendications précédentes, **caractérisé en ce que** l'information d'authentification est générée pendant la deuxième transition d'état (102) de manière à ce que l'information d'authentification présente une information relative à une relation entre l'information d'identification d'utilisateur et l'information d'identification de réseau, dans lequel l'information d'authentification est mémorisée dans le réseau de télécommunications (1).

8. Procédé selon l'une quelconque des revendications précédentes, **caractérisé en ce qu'**au moins un profil de réseau (3) spécifique à l'utilisateur, ayant rapport à l'utilisateur de l'appareil (10), est mémorisé dans le réseau de télécommunications, lequel procédé un profil de réseau (4) spécifique à la liaison, ayant rapport à la liaison de réseau (2), est associé à l'au moins un profil de réseau (3) spécifique à l'utilisateur pendant la deuxième transition d'état (102), dans lequel notamment l'au moins un profil de réseau (3) spécifique à l'utilisateur est copié sur le profil de réseau (4) spécifique à la liaison et/ou lui est légué.

9. Réseau de télécommunications (1) pour la gestion de réseau, dans lequel le réseau de télécommunications est configuré pour établir une liaison de réseau (2) entre un appareil (10) et le réseau de télécommunications (1), dans lequel le réseau de télécommunications (2) est configuré de manière à ce qu'un état de configuration (100) soit attribuable à la liaison de réseau (2), dans lequel l'état de configuration (100) est en relation avec une assistance d'exploitation au moyen d'un opérateur de réseau de télécommunications du réseau de télécommunications (1), dans lequel le réseau de télécommunications (2) est configuré pour réaliser une première transition d'état (101) de la liaison de réseau (2), de l'état de configuration (100) en un état par défaut (200), dans lequel le réseau de télécommunications (1) est configuré de manière à ce que la liaison de réseau (2) puisse être initialisée dans l'état par défaut (200), dans lequel le réseau de télécommunications (1) est configuré pour réaliser une deuxième transition d'état (102) de la liaison de réseau (2), de l'état par défaut (200) en un état (300) spécifique à l'utilisateur, dans lequel la liaison de réseau (2) est configurée pendant la deuxième transition d'état (102) de manière à ce que dans l'état (300) spécifique à l'utilisateur, un étage de fonctionnalité dédié soit attribuable, par authentification implicite d'un utilisateur de l'appareil (10), à une liaison de protocole internet associée à la liaison de réseau (2).

10. Réseau de télécommunications (1) selon la revendication 9, **caractérisé en ce que** la liaison de réseau (2) comprend une liaison de réseau fixe et/ou une liaison de réseau mobile.

11. Réseau de télécommunications (1) selon la revendication 9 ou 10, **caractérisé en ce que** le réseau de télécommunications (1) présente un composant de configuration (20), dans lequel le composant de configuration (20) est configuré de manière à ce que l'information d'identification de réseau soit détectée automatiquement, dans lequel l'information d'identification de réseau est détectée notamment en fonction d'une transmission d'une information d'identification d'utilisateur par l'intermédiaire de la liaison de réseau (2).

12. Réseau de télécommunications (1) selon l'une quelconque des revendications 9 à 11, **caractérisé en ce qu'**au moins un profil de réseau (3) spécifique à l'utilisateur, ayant rapport à l'utilisateur de l'appareil (10), est mémorisé dans le réseau de télécommunications (1), dans lequel, dans l'état (300) spécifique à l'utilisateur, un profil de réseau (4) spécifique à la liaison, ayant rapport à la liaison de réseau (2), est associé à l'au moins un profil de réseau (3) spécifique à l'utilisateur.

13. Programme d'ordinateur comprenant des moyens de code de programme, à l'aide desquels toutes les étapes d'un procédé selon l'une quelconque des revendications 1 à 8 sont réalisables lorsque le programme d'ordinateur est exécuté sur un dispositif programmable, notamment lorsqu'il est exécuté en parties sur plusieurs dispositifs programmables d'un réseau de télécommunications (1).

14. Produit de programme d'ordinateur comprenant un support lisible par ordinateur et un programme d'ordinateur, mémorisé sur le support lisible par ordinateur, doté de moyens de code de programme qui sont aptes à ce que toutes les étapes d'un procédé selon l'une quelconque des revendications 4 à 8 soient réalisables lorsque le programme d'ordinateur est exécuté sur un dispositif programmable, notamment lorsqu'il est exécuté en parties sur plusieurs dispositifs programmables d'un réseau de télécommunications (100).
